# EUROPÄISCHE PATENTSCHRIFT

(11) **EP 1 091 967 B1**
(45) Veröffentlichungstag und Bekanntmachung des Hinweises auf die Patenterteilung: **05.06.2002**
(21) Anmeldenummer: 99929298.0
(22) Anmeldetag: 22.06.1999
(51) Int. Cl.: C07F 15/00, C07F 9/50, C08G 67/02, B01J 31/16

(54) **WASSERLÖSLICHE ÜBERGANGSMETALLKOMPLEXE**
WATER-SOLUBLE TRANSITION METAL COMPLEXES
COMPLEXES DE METAUX DE TRANSITION SOLUBLES DANS L'EAU

(30) Priorität: 02.07.1998 DE 19829519
(43) Veröffentlichungstag der Anmeldung: 18.04.2001
(73) Patentinhaber: BASF AKTIENGESELLSCHAFT, 67056 Ludwigshafen (DE)
(72) Erfinder: QUEISSER, Joachim, D-68165 Mannheim (DE); SLANY, Michael, D-67281 Kirchheim (DE); GEPRÄGS, Michael, D-67245 Lambsheim (DE); LINDNER, Ekkehard, D-72076 Tübingen (DE); SCHMID, Markus, D-72793 Pfullingen (DE); WALD, Joachim, D-72458 Albstadt-Ebingen (DE); WEGNER, Peter, D-72070 Tübingen (DE)
(86) Internationale Anmeldenummer: EP9904312
(87) Internationale Veröffentlichungsnummer: WO0001708

(56) Entgegenhaltungen:
- EP-A- 0 800 852
- WO-A-98/22482
- WO-A-98/25939
- US-A- 5 247 065
- BAXLEY G T ET AL: "Synthesis and catalytic chemistry of two new water-soluble chelating phosphines. Comparison of ionic and nonionic functionalities" J. MOL. CATAL. A: CHEM. (JMCCF2,13811169);1997; VOL.116 (1-2); PP.191-198, XP002114392 Department of Chemistry, University of Oregon;Eugene, Oregon 97403-1253; USA (US)
- BAXLEY G T ET AL: "Synthesis and Characterization of Water-Soluble 1,2-Bis(bis(hydroxyalkyl)phosphino)ethane Ligands and Their Nickel(II), Ruthenium(III), and Rhodium(I) Complexes" INORG. CHEM. (INOCAJ,00201669);1996; VOL.35 (23); PP.6688-6693, XP002114393 University of Oregon;Department of Chemistry; Eugene; 97403-1253; OR; USA (US)
- VERSPUI G.: "Catalytic conversions in water. Part 9. High activity of the Pd/dpppr-s/Bronsted acid system in the alternating copolymerization of ethene and carbon monoxide." JOURNAL OF THE CHEMICAL SOCIETY, CHEMICAL COMMUNICATIONS., Nr. 3, - 7. Februar 1998 (1998-02-07) Seiten 401-402, XP002114394 CHEMICAL SOCIETY. LETCHWORTH., GB ISSN: 0022-4936 in der Anmeldung erwähnt

## Beschreibung

Die vorliegende Erfindung betrifft wasserlösliche Übergangsmetallkomplexe der allgemeinen Formel (I) 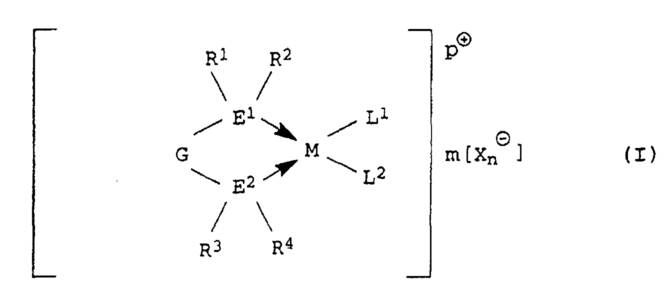 in der die Substituenten und Indizes die folgende Bedeutung haben:
- G: -(CR^{b}₂)ᵣ-, -(CR^{b}₂)ₛ-Si(R^{a})₂-(CR^{b}₂)ₜ-, -A'-O-B'- oder -A'-Z(R⁵)-B'- mit
- R⁵: Wasserstoff, unsubstituiertes oder mit funktionellen Gruppen auf der Basis der Elemente der Gruppen IVA, VA, VIA oder VIIA des Periodensystems der Elemente substituiertes C₁- bis C₂₈-Alkyl, C₃- bis C₁₄-Cycloalkyl, C₆bis C₁₅-Aryl, Alkylaryl mit 1 bis 20 C-Atomen im Alkylrest und 6 bis 15 C-Atomen im Arylrest, -N(R^{b})₂,
-Si(R^{c})₃ oder einen Rest der allgemeinen Formel (II) 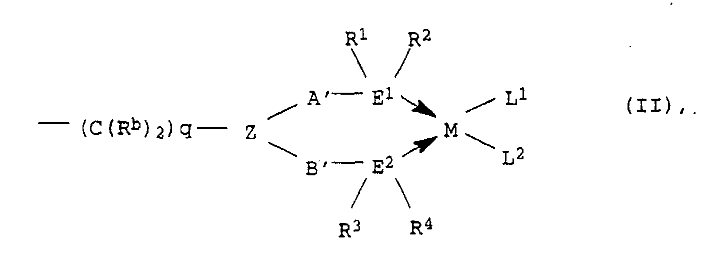
in der
- q: eine ganze Zahl von 0 bis 20 bedeutet und die weiteren Substituenten in (II) die gleiche Bedeutung wie in (I) haben,
- A', B': -(CR^{b}₂)_{r'}- oder -(CR^{b}₂)ₛ-Si(R^{a})₂-(CR^{b}₂)ₜ- oder -N(R^{b})-, ein r'-, s- oder t-atomiger Bestandteil eines Ringsystems oder zusammen mit Z ein (r'+1)-, (s+1)- oder (t+1)-atomiger Bestandteil eines Heterocyclus,
- R^{a}: unabhängig voneinander C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil,
- R^{b}: wie R^{a} oder Wasserstoff oder Si(R^{c})₃,
- R^{c}: C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil,
- r: 1, 2, 3 oder 4 und
- r': 1 oder 2,
- s, t: 0, 1 oder 2, wobei 1 ≤ s+t ≤ 3
- z: ein nichtmetallisches Element aus der Gruppe VA des Periodensystems der Elemente,
- M: ein Metall, ausgewählt aus den Gruppen VIIIB, IB oder IIB des Periodensystems der Elemente,
- E¹, E²: ein nichtmetallisches Element aus der Gruppe VA des Periodensystems der Elemente,
- R¹ bis R⁴: mit mindestens einer polaren protonenaktiven oder ionischen funktionellen Gruppe auf der Basis von nichtmetallischen Elementen der Gruppen IVA bis VIA der Periodensystems der Elemente substituiertes lineares oder verzweigtes C₂- bis C₂₈-Alkyl, C₃- bis C₁₄-Cycloalkyl oder Alkylaryl mit 1 bis 28 C-Atomen im Alkylteil und 6 bis 15 C-Atomen im Arylteil,
- L¹, L²: formal geladene oder neutrale Liganden,
- x: formal ein- oder mehrwertige Anionen,
- p: 0, 1, 2, 3 oder 4 und
- m, n: 0, 1, 2, 3 oder 4,
- wobei: p = m x n.

Des weiteren betrifft die Erfindung die Verwendung dieser Metallkomplexe für die Herstellung von linearen, alternierenden Copolymeren aus Kohlenmonoxid und α-olefinisch ungesättigten Verbindungen. Außerdem betrifft die Erfindung wasserlösliche Chelatliganden, ein Verfahren zur Herstellung dieser Chelatliganden sowie deren Verwendung für die Herstellung wasserlöslicher Übergangsmetallkomplexe.

Die WO 98/25939 offenbart cis-verbrückte Übergangsmetallkomplexe, welche Diamin- oder Diphosphinliganden tragen. Durch das Fehlen geeigneter polarer Substituenten an den Liganden sind diese Metallkomplexe jedoch nicht wasserlöslich.

Wasserlösliche Chelatliganden und deren Verwendung zur Herstellung wasserlöslicher Übergangsmetallkomplexe werden von G.T. Baxley et al. in J. Mol. Catal. A; Chem. 1997 (116) Seiten 191 bis 198 sowie in Inorg. Chem. 1996 (35) Seiten 6688 bis 6693 beschrieben. Desweiteren werden in der EP-A 800852 verschiedene Eisenkomplexe genannt, welche zweizähnige Liganden, insbesondere Diphosphine tragen. Die Herstellung von Copolymeren aus Kohlenmonoxid und α-olefinisch ungesättigten Verbindungen unter Verwendung der vorgenannten Übergangsmetallkomplexe wird in diesen Schriften aber nicht offenbart.

Übergangsmetallkatalysierte Verfahren zur Herstellung linearer, alternierender Copolymere aus Kohlenmonoxid und α-olefinisch ungesättigten Verbindungen, auch kurz als Kohlenmonoxidcopolymere oder Polyketone bezeichnet, sind bekannt. Beispielsweise wird in der EP-A 0 121 965 ein mit bidentaten Phosphinliganden chelatisierter cis-Palladiumkomplex, [Pd(Ph₂P(CH₂)₃PPh₂)](OAc)₂ (Ph = Phenyl, Ac = Acetyl), eingesetzt. Die Kohlenmonoxidcopolymerisation kann in Suspension, wie in der EP-A 0 305 011 beschrieben, oder in der Gasphase, beispielsweise gemäß EP-A 0 702 045, durchgeführt werden. Häufig eingesetzte Suspensionsmittel sind zum einen niedermolekulare Alkohole, insbesondere Methanol (s.a. EP-A 0 428 228), zum anderen unpolare oder polar aprotische Flüssigkeiten wie Dichlormethan, Toluol oder Tetrahydrofuran (vgl. EP-A 0 460 743 und EP-A 0 590 942). Als gut geeignet für die genannten Polymerisationsverfahren haben sich insbesondere Komplexverbindungen mit Bisphosphinchelatliganden erwiesen, deren Reste am Phosphoratom Aryl- oder substituierte Arylgruppen darstellen. Besonders häufig werden demgemäß als Chelatliganden 1,3-Bis(diphenylphosphin)propan oder 1,3-Bis[di-(o-methoxyphenyl)-phosphin]propan eingesetzt (s.a. Drent et al., Chem. Rev., 1996, 96, S. 663 - 681). Üblicherweise wird die Kohlenmonoxidcopolymerisation in Gegenwart von Säuren durchgeführt.

Spezielle 1,3-Diphosphinopropanliganden und die Verwendung deren Übergangsmetallkomplexe als Katalysatoren u.a. für die Copolymerisation von Kohlenmonoxid und α-olefinisch ungesättigten Verbindungenin unterschiedlichen fluiden Medien werden in den Schriften WO 98/22482 (Wasser) und US-A 5,247,065 (niedermolekulare Ketone oder Alkohole) offenbart.

Die Kohlenmonoxidcopolymerisation in niedermolekularen Alkoholen wie Methanol ist mit dem Nachteil behaftet, daß das sich bildende Kohlenmonoxidcopolymer bis zu 80 Vol.-% an z.B. Methanol aufnimmt. Demzufolge ist ein hoher Energieaufwand erforderlich, um das erhaltene Kohlenmonoxidcopolymer zu trocknen und rein zu isolieren. Von Nachteil ist weiterhin, daß selbst nach einem intensiven Trocknungsvorgang immer noch Restmengen an Alkohol im Kohlenmonoxidcopolymerisat verbleiben. Eine Anwendung als Verpakkungsmaterial für Lebensmittel scheidet damit für auf diese Art und Weise hergestellte Formmassen von vornherein aus. In der EP-A 0 485 035 wird die Verwendung von Zusätzen an Wasser in Anteilen von 2,5 bis 15 Gew.-% zum alkoholischen Suspensionsmittel vorgeschlagen, um die Restmengen an niedermolekularem Alkohol im Kohlenmonoxidcopolymerisat zu eliminieren. Allerdings führt auch diese Vorgehensweise nicht zu methanolfreien Copolymerisaten. Die Verwendung halogenierter Kohlenwasserstoffe oder Aromaten wie Dichlormethan oder Chlorbenzol bzw. Toluol bringt andererseits Probleme insbesondere bei der Entsorgung mit sich.

Zur Umgehung der mit den genannten Suspensionsmitteln einhergehenden Nachteile wird von Jiang und Sen, Macromolecules, 1994, 27, S. 7215-7216, die Herstellung von linearen, alternierenden Kohlenmonoxidcopolymeren in wässrigen Systemen unter Verwendung eines Katalysatorsystems, bestehend aus [Pd(CH₃CN)₄](BF₄)₂ und 1,3-Bis[di-(3-benzoesulfonsäure)phosphin]propan als wasserlöslichem Chelatliganden, beschrieben. Allerdings ist die erzielte Katalysatoraktivität sehr gering und für eine großtechnische Darstellung daher ungeeignet.

Verspui et al., Chem. Commun., 1998, S. 401-402, gelingt gegenüber Jiang und Sen eine Steigerung der Katalysatoraktivität bei der Copolymerisation von Kohlenmonoxid und Ethen, indem sie den genannten Chelatliganden infolge einer verbesserten Synthesevorschrift (s.a. Hermann et al., Angew. Chem. Int. Ed. Engl., 1995, 34, S. 811 ff) in wesentlich reinerer Form einsetzen. Weiterhin ist die Gegenwart einer Brönsted-Säure erforderlich, um zu gegenüber Jiang und Sen verbesserten Katalysatoraktivitäten zu gelangen. Wenngleich sich mit Hilfe einer verbesserten Synthesevorschrift der Chelatligand 1,3-Bis[di-(3-benzoesulfonsäure)phosphin]propan tatsächlich in reinerer Form darstellen läßt, ist damit jedoch kein Weg aufgezeigt, wie man zu geeigneten Chelatliganden mit anderen Substitutionsmustern gelangt. So sind die beschriebenen wasserlöslichen Übergangsmetallkomplexe ausschließlich auf sulfonierte aromatische Substituenten am Phosphor beschränkt. Die Herstellung dieser Chelatliganden erfordert zudem die Handhabung sehr aggressiver Substanzen wie Borsäure, konzentrierte Schwefelsäure und Oleum. Eine Ausweitung auf andere Systeme ist aufgrund der vorgegebenen Struktur grundsätzlich nicht möglich.

Es wäre daher wünschenswert, auf Metallkomplexe für die Copolymerisation von Kohlenmonoxid und α-olefinisch ungesättigten Verbindungen in wässrigen Systemen zurückgreifen zu können, die von vornherein eine große Anzahl unterschiedlicher Substituenten am Chelatliganden zulassen und gleichzeitig eine gleichbleibend gute Reproduzierbarkeit bei hohem Wirkungsgrad ermöglichen.

Der vorliegenden Erfindung lag daher die Aufgabe zugrunde, wasserlösliche Übergangsmetallkomplexe zu finden, die als aktiver Bestandteil eines Katalysatorsystems für die Herstellung linearer, alternierender Kohlenmonoxidcopolymere in wässrigen Medien geeignet sind.

Demgemäß wurden die eingangs definierten wasserlöslichen Übergangsmetallkomplexe gefunden. Des weiteren wurde ein Verfahren für die Herstellung dieser Übergangsmetallkomplexe sowie deren Verwendung für die Herstellung linearer, alternierender Kohlenmonoxidcopolymere gefunden.

Des weiteren wurden wasserlösliche Chelatliganden, ein Verfahren zur Herstellung dieser Chelatliganden sowie deren Verwendung für die Herstellung wasserlöslicher Übergangsmetallkomplexe gefunden. Bevorzugte erfindungsgemäße wasserlösliche Übergangsmetallkomplexe gehen zurück auf Verbindungen der allgemeinen Formel (I) 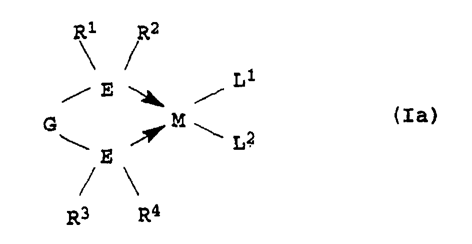 in der die Substituenten und Indizes die folgende Bedeutung haben:
- G: -(CR^{b}₂)ᵣ- oder -(CR^{b}₂)-N(R⁵)-(CR^{b}₂)-, worin
- R^{b}: Wasserstoff, C₁- bis C₁₀-Alkyl oder C₆- bis C₁₀-Aryl,
- r: 1, 2, 3 oder 4,
- R⁵: Wasserstoff, C₁- bis C₁₀-Alkyl, C₃- bis C₁₀-Cycloalkyl, C₆- bis C₁₅-Aryl, mit funktionellen Gruppen auf Basis der Elemente der Gruppen IVA, VA, VIA, VIIA des Periodensystems der Elemente substituiertes C₁- bis C₁₀-Alkyl, C₃- bis C₁₀-Cycloalkyl oder C₆- bis C₁₅-Aryl,
- M: Palladium oder Nickel,
- E¹, E²: Phosphor,
- R¹ bis R⁴: lineare, verzweigte oder Carbocyclen enthaltende C₂- bis C₂₈-Alkyleinheiten oder C₃- bis C₁₄-Oycloalkyleinheiten, die über mindestens eine endständige oder interne Hydroxy-, Aminosäure-, Carbonsäure-, Phosphorsäure-, Ammonium- oder Sulfonsäuregruppe verfügen, oder eine Alkylarylgruppe mit 1 bis 28 C-Atomen im Alkylteil und 6 bis 15 C-Atomen im Arylteil, wobei der Alkyl- oder Arylteil mit mindestens einer Hydroxy-, Carbonsäure-, Aminosäure-, Phosphorsäure-, Ammonium- oder Sulfonsäuregruppe substituiert ist,
- L¹, L²: Acetat, Trifluoracetat, Tosylat oder Halogenide, mit
- p, m, n: 0.

Grundsätzlich sind als Bestandteil der Übergangsmetallkomplexe (I) bidentate Chelatliganden der allgemeinen Formel (R¹) (R²)E¹-G-E²(R³) (R⁴) (III) geeignet, in der die Substituenten und Indizes die vorgenannte Bedeutung haben.

Die verbrückende Struktureinheit G in den erfindungsgemäßen Metallkomplexen (I) bzw. den Chelatliganden (III) besteht im allgemeinen aus ein- oder mehratomigen Verknüpfungssegmenten. Unter einer verbrückenden Struktureinheit wird grundsätzlich eine Gruppierung verstanden, die die Elemente E¹ und E² miteinander verbindet. Unter solche Struktureinheiten fallen beispielsweise substituierte oder unsubstituierte Alkylenketten oder solche Alkylenketten, in denen eine Alkyleneinheit durch eine Silylengruppe, eine Amino- oder Phosphinogruppe oder durch einen Ethersauerstoff ersetzt sind.

Unter den einatomig verbrückten Struktureinheiten sind solche mit einem verbrückenden Atom aus der Gruppe IVA des Periodensystems der Elemente wie -C(R^{b})₂- oder -Si(R^{a})₂-, worin R^{a} unabhängig voneinander insbesondere für lineares oder verzweigtes C₁- bis C₁₀-Alkyl, beispielsweise Methyl, Ethyl, i-Propyl oder t-Butyl, C₃- bis C₆-Cycloalkyl, wie Cyclopropyl oder Cyclohexyl, C₆- bis C₁₀-Aryl, wie Phenyl oder Naphthyl, mit funktionellen Gruppen auf der Basis der nichtmetallischen Elemente der Gruppen IVA, VA, VIA oder VIIA des Periodensystems substituiertes C₆- bis C₁₀-Aryl, beispielsweise Tolyl, (Trifluormethyl)phenyl, Dimethylaminophenyl, p-Methoxyphenyl oder partiell oder perhalogeniertes Phenyl, Aralkyl mit 1 bis 6 C-Atomen im Alkylteil und 6 bis 10 C-Atomen im Arylteil, beispielsweise Benzyl, und R^{b} insbesondere für Wasserstoff und daneben für die vorstehend für R^{a} angegebenen Bedeutungen stehen, bevorzugt. R^{a} stellt insbesondere eine Methylgruppe, R^{b} insbesondere Wasserstoff dar.

Unter den mehratomig verbrückten Systemen sind die zwei-, dreiund vieratomig verbrückten Struktureinheiten hervorzuheben, wobei die dreiatomig verbrückten Systeme in der Regel bevorzugt eingesetzt werden.

Geeignete dreiatomig verbrückte Struktureinheiten basieren im allgemeinen auf einer Kette aus Kohlenstoffatomen, also zum Beispiel Propylen (-CH₂CH₂CH₂-), oder auf einer Brückeneinheit mit einem Heteroatom aus der Gruppe IVA, VA oder VIA des Periodensystems der Elemente, wie Silicium, Stickstoff, Phosphor oder Sauerstoff im Kettengerüst.

Die Brückenkohlenstoffatome können im allgemeinen mit C₁- bis C₆-Alkyl wie Methyl, Ethyl oder t-Butyl, C₆- bis C₁₀-Aryl wie Phenyl oder durch funktionelle Gruppen auf Basis der Elemente der Gruppen IVA, VA, VIA oder VIIA der Periodensystems der Elemente, also beispielsweise Triorganosilyl, Dialkylamino, Alkoxy, Hydroxy oder Halogen substituiert sein. Geeignete substituierte Propylenbrücken sind zum Beispiel solche mit einer Methyl-, Phenyl-, Hydroxy-, Trifluormethyl-, ω-Hydroxyalkyl- oder Methoxygruppe in 2-Position.

Unter den mehratomig verbrückten Struktureinheiten mit einem Heteroatom im Kettengerüst werden vorteilhaft Verbindungen eingesetzt, in denen Z Stickstoff oder Phosphor, insbesondere Stickstoff bedeutet (s.a. Formel (I)). Der Substituent R⁵ an Z kann insbesondere bedeuten: Wasserstoff, lineares oder verzweigtes C₁bis C₂₈-Alkyl wie Methyl, Ethyl, i-Propyl, t-Butyl, n-Hexyl oder n-Dodecyl, C₃- bis C₁₄-Oycloalkyl, insbesondere C₃- bis C₈-Cycloalkyl wie Cyclopropyl oder Cyclohexyl, C₆- bis C₁₅-Aryl, insbesondere C₆- bis C₁₀-Aryl, beispielsweise Phenyl, oder Alkylaryl mit 1 bis 20 C-Atomen im Alkylrest und 6 bis 10 C-Atomen im Arylrest, beispielsweise Benzyl.

Unter die genannten Alkyl- und Arylreste fallen sowohl unsubstituierte wie auch substituierte Verbindungen. Die substituierten Verbindungen können zum Beispiel funktionelle Gruppen auf der Basis der Elemente der Gruppen IVA, VA, VIA oder VIIA des Periodensystems der Elemente enthalten. Geeignet sind u.a. Triorganosilylgruppen wie Trimethylsilyl oder t-Butyldiphenylsilyl, die Carbonsäuregruppe oder Carbonsäurederivate wie Ester oder Amide, primäre, sekundäre oder tertiäre Aminogruppen wie Dimethylamino oder Methylphenylamino, die Nitro- und die Hydroxygruppe, des weiteren Alkoxyreste wie Methoxy oder Ethoxy, die Sulfonatgruppe sowie Halogenidatome wie Fluor, Chlor oder Brom. Aryl bedeutet im Sinne der vorliegenden Erfindung auch substituiertes und unsubstituiertes Heteroaryl, also zum Beispiel Pyridyl oder Pyrrolyl. Unter Alkylreste R⁵ fallen ebenfalls langkettige Alkylengruppen mit 12 bis 22 C-Atomen in der Kette, die über polare protonenaktive oder ionische Funktionalitäten wie die Sulfonsäure-, Carbonsäure-, Hydroxy-, Aminosäure- oder Ammoniumgruppe, zum Beispiel in endständiger Position, verfügen können.

Bevorzugt sind als Reste R⁵ auch solche Verbindungen, die einen elektronenziehenden Substituenten darstellen. Geeignet als elektronenziehende Substituenten sind zum Beispiel Alkylgruppen mit einem oder mehreren elektronenziehenden Resten wie Fluor, Chlor, Nitril oder Nitro in α- oder β-Position zu Z. Weiterhin geeignet sind Arylgruppen mit den genannten elektronenziehenden Resten sowie als direkt an Z gebundene Reste, auch die Nitril-, Sulfonat und Nitrogruppe. Als geeignete elektronenziehende Alkylreste seien beispielhaft die Trifluormethyl-, Trichlorethyl-, Difluormethyl-, 2,2,2-Trifluorethyl-, Nitromethyl- und die Cyanomethylgruppe genannt. Als geeignete elektronenziehende Arylreste seien beispielhaft genannt: m-, p-, o-Fluor- oder Chlorphenyl, 2,4-Difluorphenyl, 2,4-Dichlorphenyl, 2,4,6-Trifluorphenyl, 3,5-Bis(trifluormethyl)phenyl, Nitrophenyl, 2-Chlor-5-nitrophenyl und 2-Brom-5-nitrophenyl. In diesem Zusammenhang kommen gleichfalls Carbonyleinheiten als Reste R⁵ in Frage, so daß, wenn Z Stickstoff bedeutet, Z und R⁵ eine Carbonsäueamidfunktionalität ausbilden. Als ein solcher geeigneter Rest seien die Acetyl- oder die Trifluoracetylgruppe genannt.

Unter den Resten R⁵ sind insbesondere bevorzugt t-Butyl, Phenyl, p-Trifluorphenyl, Trifluormethyl, 2,2,2-Trifluorethyl, Pentafluorphenyl, 3,5-Bis(trifluormethyl)phenyl sowie ortho-, z.B. 3,4-, meta-, z.B. 2,4-, oder para-, z.B. 2,5-Difluorphenyl.

Als Einheiten A' und B' gemäß den Formeln (I) bis (III) kommen C₁bis C₄-Alkyleneinheiten in substituierter oder unsubstituierter Form in Frage, also beispielsweise Methylen, Ethylen, Propylen oder Ethyliden, Propyliden sowie Benzyliden. Bevorzugt werden Methylen, Ethylen, Ethyliden oder Benzyliden, besonders bevorzugt Methylen eingesetzt.

A' und B' können ebenfalls ein ein-, zwei-, drei- oder vieratomiger Bestandteil eines aliphatischen oder aromatischen Ringsystems sein. Zum Beispiel können A' und B' eine Methylen- oder Ethyleneinheit eines Cyclopropyl-, Cyclopentyl- oder Cyclohexylrings darstellen. Als Ringsysteme kommen auch aliphatische und aromatische Heterocyclen in Betracht.

A' und B' können des weiteren Bestandteil eines Heterocyclus sein, der aus den Komponenten A'-Z-R⁵ bzw. B'-Z-R⁵ gebildet wird, d.h. A'-Z-R⁵ bzw. B'-Z-R⁵ können z.B. einen substituierten oder unsubstituierten Pyrrolidin- oder Piperidinring ausbilden.

Als chelatisierend wirkende Atome E¹ und E² kommen unabhängig voneinander die nichtmetallischen Elemente der Gruppe VA des Periodensystems der Elemente in Frage, wobei bevorzugt auf Stickstoff und Phosphor, insbesondere Phosphor zurückgegriffen wird. In einer bevorzugten Ausführungsform stellen E¹ und E² in den Verbindungen (I) und (III) Phosphor dar.

In den erfindungsgemäßen Übergangsmetallkomplexen stellen die Reste R¹ bis R⁴ mit mindestens einer polaren protonenaktiven oder ionischen funktionellen Gruppe auf der Basis von Elementen der Gruppen IVA bis VIA der Periodensystems der Elemente substituiertes C₂- bis C₂₀-Alkyl, C₃- bis C₁₄-, vorzugsweise C₃- bis C₈-Cycloalkyl oder Alkylaryl mit 1 bis 28 C-Atomen im Alkylteil und 6 bis 15 C-Atomen im Arylteil dar. Vorzugsweise stehen R¹ bis R⁴ für lineare, verzweigte oder Carbocyclen enthaltende C₂- bis C₂₈-Alkyloder C₃- bis C₁₄-Cycloalkyleinheiten, die über mindestens eine endständige oder interne Hydroxy-, Carbonsäure-, Phosphorsäure-, Ammonium-, Aminosäure-, Sulfonsäuregruppe verfügen, oder eine Alkylarylgruppe mit 1 bis 28 C-Atomen im Alkylteil und 6 bis 15 C-Atomen im Arylteil, wobei der Alkyl- oder Arylteil mit mindestens einer Hydroxy-, Carbonsäure-, Phosphorsäure-, Ammonium-, Aminosäure-, Sulfonsäuregruppe substituiert ist.

Es können auch die Salze der Carbon-, Phosphor-, Amino- oder Sulfonsäuren eingesetzt werden. Geeignete Salze sind zum Beispiel Alkali- oder Erdalkalisalze wie Natrium-, Kalium- oder Magnesiumcarboxylate oder -sulfonate.
Geeignete Alkylreste R¹ bis R⁴ sind beispielsweise Alkyleneinheiten mit einer oder zwei endständigen Hydroxy-, Carbonsäure-, Sulfonsäure- oder Ammoniumgruppen. Des weiteren können die Reste R¹ bis R⁴ auch mehr als zwei polare Gruppen aufweisen und zum Beispiel über vier oder sechs Hydroxy-, Ammonium- oder Carbonsäuregruppen verfügen. Demgemäß können die Reste R¹ bis R⁴ in einer Chelatverbindung (III) jeweils auch über unterschiedliche funktionelle Gruppen verfügen. Auch können die Reste R¹ bis R⁴ funktionelle Gruppen in voneinander unterschiedlicher Anzahl aufweisen. Als Reste R¹ bis R⁴ kommen demgemäß Verbindungen in Frage, die unter die folgende Formel (IV) fallen:

-(CR^{d} ₂)ₖ-(T)₁-(CR^{d} ₂)ₖ,-Y (IV),

in der die Substituenten und Indizes die folgende Bedeutung haben:
- R^{d}: wie R^{b}, zusätzlich Y,
- T: C₃- bis C₁₀-Cycloalkylen, insbesondere C₃- bis C₆-Cycloalkylen, oder C₆- bis C₁₅-Arylen, insbesondere C₆- bis C₁₀-Arylen, gegebenenfalls substituiert mit R^{d} oder Y,
- k: 0 bis 20, falls 1 = 0 oder 1 = 1 und T = Cycloalkyl und 1 bis 20, falls 1 = 1 and T = Aryl,
- k': 0 bis 20,
- l: 0 oder 1 und
- Y: eine polare protonenaktive oder ionische funktionelle Gruppe auf der Basis von Elementen der Gruppen IVA bis VIA des Periodensystems der Elemente.

Als geeignete Reste Y kommen die Hydroxy-, Aminosäure-, Carbonsäure-, Phosphorsäure-, Ammonium- und die Sulfonsäuregruppe in Frage. Unter den Cycloaliphaten T sind die Cyclopropyl- und die Cyclohexylgruppe sowie als Aryl- bzw. Aryleneinheit T der Phenyl(en)rest bevorzugt. Der Index k nimmt bevorzugt Werte im Bereich von 2 bis 20, bevorzugt von 3 bis 18 an, k' nimmt bevorzugt Werte im Bereich von 0 bis 10, insbesondere von 1 bis 8 an.

Die erfindungsgemäßen wasserlöslichen Chelatliganden der allgemeinen Formel (III) (R¹) (R²)E¹-G-E²(R³)(R⁴) erhält man beispielsweise dadurch, daß man
a) eine Verbindung der allgemeinen Formel (IIIa)

   L-(CR^{b} ₂)ᵣ-L oder L-(CR^{b} ₂)-N(R⁵)-(CR^{b} ₂)-L(IIIa),

   worin
   - R^{b}: Wasserstoff, C₁- bis C₂₀-Alkyl oder C₆- bis C₁₅-Aryl,
   - r: 1, 2, 3 oder 4,
   - R⁵: Wasserstoff, C₁- bis C₂₈-Alkyl, C₃- bis C₁₄-Cycloalkyl, C₆- bis C₁₅-Aryl, mit funktionellen Gruppen auf Basis der Elemente der Gruppen IVA, VA, VIA, VIIA des Periodensystems der Elemente substituiertes C₁- bis C₂₈-Alkyl, C₃- bis C₁₄-Cycloalkyl oder C₆- bis C₁₅-Aryl und
   - L: unabhängig voneinander Chlorid, Bromid oder Iodid bedeuten,
   mittels Arbuzov-Reaktion mit Trialkoxyphosphinen in Verbindungen der allgemeinen Formel (IIIb) überführt, in denen
   - L: P(L')₃ bedeutet, mit
   - L': O-C₁- bis O-C₆-Alkyl, O-C₆- bis O-C₁₀-Aryl oder 0-Alkylaryl mit 1 bis 6 C-Atomen im Alkyl- und 6 bis 20 C-Atomen im Arylteil,
b) die Verbindung (IIIb) reduktiv in die Verbindung der allgemeinen Formel (IIIc) überführt, in der L' für Wasserstoff steht, und
c) die Verbindung der Formel (IIIc) in Gegenwart von mindestens vier Äquivalenten an olefinisch ungesättigter Verbindung, welche über mindestens eine polare protonenaktive oder ionische funktionelle Gruppe auf der Basis von nichtmetallischen Elementen der Gruppen IVA bis VIA des Periodensystems der Elemente verfügt, radikalisch polymerisiert.

Bevorzugt greift man auf olefinisch ungesättigte Verbindung der Formel (IVa)

CH₂=C(R^{d})-(CR^{d} ₂)ₖ₋₁-(T)₁-(CR^{d} ₂)_{k'}-Y (IVa)

zurück, in der die Substituenten und Indizes die folgende Bedeutung haben:
- R^{d}: unabhängig voneinander Wasserstoff, C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil sowie zusätzlich Y,
- T: C₃- bis C₁₀-Cycloalkylen, insbesondere C₃- bis C₆-Cycloalkylen, oder C₆- bis C₁₅-Arylen, insbesondere C₆- bis C₁₀-Arylen, gegebenenfalls substituiert mit R^{d} oder Y,
- k: 1 bis 20, falls 1 = 0 oder 1 = 1 und T = Cycloalkyl und 2 bis 20, falls 1 = 1 und T = Aryl,
- k': 0 bis 20,
- l: 0 oder 1 und
- Y: eine polare protonenaktive oder ionische funktionelle Gruppe auf der Basis von Elementen der Gruppen IVA bis VIA des Periodensystems der Elemente.

Für die Herstellung von beispielsweise Propylen-verbrückten (G = -(CH₂)₃-) Chelatligandverbindungen (III) geht man üblicherweise von dem kommerziell erhältlichen 1,3-Dibrompropan aus. Über eine doppelte Arbuzov-Reaktion, zum Beispiel mit Trimethoxy- oder Triethoxyphosphin, gelangt man zu 1,3-Bisphosphonsäurederivaten, die sich reduktiv, wie in "Methoden der organischen Chemie (Houben-Weyl)", 4. Aufl., Band XII/1, Teil 1, Georg Thieme Verlag, 1963, S. 62, beschrieben, in 1,3-Diphosphinpropan überführen lassen. Als Reduktionsmittel eignen sich z.B. Lithiumaluminiumhydrid oder Diisobutylaluminiumhydrid. 1,3-Diphosphinpropan eröffnet über eine Hydrophosphinierungsreaktion mit den genannten funktionalisierten Olefinen einen flexiblen Zugang zu substituierten Bisphosphin-Chelatliganden, Die Hydrophosphinierung verläuft im allgemeinen über einen radikalischen Mechanismus und kann sowohl thermisch, photochemisch oder mit Hilfe eines Radikalstarters initiiert werden. Für eine thermische Initiierung sind im allgemeinen Temperaturen im Bereich von 20 bis 100°C und Drücke von 0,1 bis 5 bar erforderlich. Als Radikalstarter sind zum Beispiel Dit-butyl-peroxid oder Azo-bis-[isobuttersäurenitril] geeignet. Zur photochemischen Initiierung reicht in der Regel bereits die UV-Bestrahlung einer Hg-Hochdrucklampe über einen Zeitraum von 2 bis 48 Stunden für eine quantitative Hydrophosphinierung aus. Letztgenanntes Verfahren wird in der Regel bevorzugt. Über radikalisch initiierte Verfahren werden bei der Hydrophosphinierung im allgemeinen Anti-Markovnikov-Produkte erhalten.

Daneben gelingt die Darstellung geeigneter Chelatligandverbindungen auch unter sauer katalysierten Bedingungen. Die nach diesem Verfahren erhaltenen Produkte fallen infolge der Isomerisierung der olefinischen Doppelbindung unter den sauren Reaktionsbedingungen häufig als Gemisch an. Der Verfahrensschritt der Hydrophosphinierung findet sich z.B. in "Methoden der organischen Chemie (Houben-Weyl)", 4. Aufl., Band XII/1, Teil 1, Georg Thieme Verlag, 1963, S. 25 bis 28, beschrieben.

Für die Herstellung von Chelatliganden mit Resten R¹ bis R⁴, die Carbonsäuregruppen tragen, hat es sich als vorteilhaft erwiesen, zunächst von olefinisch ungesättigten Verbindungen auszugehen, die mit entsprechenden Carbonsäureestergruppen derivatisiert sind, und diese anschließend in der Hydrophosphinierungsreaktion einzusetzen. Die freien Carbonsäuren können mittels Verseifung nach bekannten Methoden gewonnen werden.

Erfindungsgemäß sind für die genannte Hydrophosphinierungsreaktion alle Olefine geeignet, die unter diese Verbindungsklasse fallen, sofern sie über eine polare protonenaktive oder ionische funktionelle Gruppe verfügen. In Frage kommen beispielsweise C₃bis C₂₈-Alkene mit mindestens einer internen oder endständigen Doppelbindung, die über mindestens eine Hydroxy-, Aminosäure-, Carbonsäure-, Phosphorsäure-, Ammonium- oder Sulfonsäuregruppe verfügen. In Frage kommen ebenfalls olefinische Verbindungen mit aromatischen Resten, wobei die funktionelle Gruppe sowohl am aliphatischen als auch am aromatischen Rest vorliegen kann, also beispielsweise 4-(1-Penten)-benzoesäure oder 3-Phenyl-pent-5-encarbonsäure. Weiterhin sind olefinische Verbindungen mit aliphatischen Carbocyclen in der Alkylenkette oder als Substituent geeignet. Des weiteren können auch cyclische Olefine wie Cyclohexen-3-ol oder Cycloocten-4-ol verwendet werden. Selbstverständlich kann auch auf Olefine mit mehreren polaren protonenaktiven oder ionischen funktionellen Gruppen zurückgegriffen werden. Bevorzugt setzt man bei der Hydrophosphinierungsreaktion der α,ω-Bisphosphine geeignete α-olefinische Verbindungen ein. Als solche kommen zum Beispiel auch heteroatomhaltige α-Olefine, wie (Meth)acrylsäureester oder -amide sowie Homoallyl- oder Allylalkohole in Betracht.

Besonders bevorzugt wird auf Reste R¹ bis R⁴ zurückgegriffen, bei denen die durch die polaren protonenaktiven oder ionischen funktionellen Gruppen induzierte Hydrophilie ausreicht, den Metallkomplex (I) vollständig wasserlöslich zu machen. Je größer die Anzahl der funktionellen Gruppen an den Resten R¹ bis R⁴ ist, um so größer kann auch der lipophile aliphatische oder aliphatischaromatische Anteil sein. Bevorzugt sind zum Beispiel als Reste R¹ bis R⁴ mit jeweils einer Hydroxygruppe solche mit 2 bis 15 C-Atomen in der Alkyleinheit.

In einer besonders bevorzugten Ausführungsform des Chelatliganden (III) verfügen die Reste R¹ bis R⁴ als Alkylsubstituenten mit einer Hydroxygruppe über 4 bis 12, insbesondere 4 bis 7 C-Atome, als Alkylsubstituenten mit einer Carbonsäuregruppe über 4 bis 15, insbesondere 5 bis 12 C-Atome, als Alkylsubstituenten mit einer Sulfonsäuregruppe über 4 bis 18, insbesondere 5 bis 15 C-Atome sowie als Alkylsubstituenten mit einer Ammoniumgruppe über 4 bis 22, insbesondere 5 bis 20 C-Atome.

Geeignet als Chelatliganden (III) sind beispielsweise
1,3-Bis(di-5-hydroxypentyl)phosphinopropan,
1,3-Bis(di-6-hydroxyhexyl)phosphinopropan,
1,3-Bis(di-7-hydroxyheptyl)phosphinopropan,
1,3-Bis(di-8-hydroxyoctyl)phosphinopropan,
1,3-Bis(di(3-hydroxycyclopentyl)propyl)phosphinopropan,
1,3-Bis[di-5-(sulfonsäure)pentyl]phospinopropan,
1,3-Bis[di-6-(sulfonsäure)hexyl]phosphinopropan,
1,3-Bis[di-7-(sulfonsäure)heptyl]phosphinopropan,
1,3-Bis[di-8-(sulfonsäure)octyl]phosphinopropan,
1,3-bis[di(3-(sulfonsäure)cyclopentyl)propyl]phosphinopropan,
1,3-Bis(di-5-pentansäure)phospinopropan,
1,3-Bis(di-6-hexansäure)phospinopropan,
1,3-Bis(di-7-heptansäure)phosphinopropan,
1,3-Bis(di-8-octansäure)phosphinopropan,
Bis[(di-5-hydroxypentyl)phospinomethyl]phenylamin,
Bis[(di-6-hydroxyhexyl)phosphinomethyl]phenylamin,
Bis[(di-7-hydroxyheptyl)phosphinomethyl]phenylamin,
Bis[(di-8-hydroxyoctyl)phosphinomethyl]phenylamin,
Bis[(di(3-hydroxycyclopentyl)propyl]phenylamin,
Bis[(di-5-(sulfonsäure)pentyl)phosphinomethyl]phenylamin,
Bis[(di-6-(sulfonsäure)hexyl)phospinomethyl]phenylamin,
Bis[(di-7-(sulfonsäure)heptyl)phosphinomethyl]phenylamin,
Bis[(di-8-(sulfonsäure)octyl)phosphinomethyl]phenylamin,
Bis[(di(3-sulfonsäure)cyclopentyl)propyl]phospinomethyl]phenylamin,
Bis[(di-5-pentansäure)phospinomethyl]phenylamin,
Bis[(di-6-hexansäure)phospinomethyl]phenylamin,
Bis[(di-7-heptansäure)phosphinomethyl]phenylamin und
Bis[(di-8-octansäure)phosphinomethyl]phenylamin.

Besonders bevorzugt unter den genannten Chelatligandverbindungen sind jene, in denen die Reste R¹ bis R⁴ einen mit einer Hydroxyoder Carbonsäuregruppe substituierten Hexyl-, Octyl-, Cyclopentyl- oder Cyclohexylrest darstellen.

Als Metalle M der erfindungsgemäßen Übergangsmetallkomplexe eignen sich die Metalle der Gruppen VIIIB, IB und IIB des Periodensystems der Elemente, also neben Eisen, Cobalt und Nickel vornehmlich die Platinmetalle wie Ruthenium, Rhodium, Osmium, Iridium und Platin sowie ganz besonders bevorzugt Palladium. Die Metalle können in den Komplexen (I) formal ungeladen, formal einfach positiv geladen oder vorzugsweise formal zweifach positiv geladen vorliegen.

Geeignete formal geladene anorganische Liganden L¹, L² sind Hydrid, Halogenide, Sulfate, Phosphate oder Nitrate. Des weiteren sind geeignet Carboxylate oder Salze organischer Sulfonsäuren wie Methylsulfonat, Trifluormethylsulfonat oder p-Toluolsulfonat. Unter den Salzen organischer Sulfonsäuren ist p-Toluolsulfonat bevorzugt. Als formal geladene Liganden L¹, L² sind Carboxylate, bevorzugt C₁- bis C₂₀-Carboxylate und insbesondere C₁- bis C₇-Carboxylate, also z.B. Acetat, Trifluoracetat, Propionat, Oxalat, Citrat oder Benzoat bevorzugt. Besonders bevorzugt ist Acetat.

Geeignete formal geladene organische Liganden L¹, L² sind auch C₁bis C₂₀-aliphatische Reste, C₃- bis C₃₀-cycloaliphatische Reste, C₇- bis C₂₀-Aralkylreste mit C₆- bis C₁₄-Arylresten und C₁- bis C₆-Alkylresten sowie C₆- bis C₂₀-aromatische Reste, beispielsweise Methyl, Ethyl, Propyl, i-Propyl, t-Butyl, n-, i-Pentyl, Cyclohexyl, Benzyl, Phenyl und aliphatisch oder aromatisch substituierte Phenylreste.

Als formal ungeladene Liganden L¹, L² sind generell Lewisbasen geeignet, also Verbindungen mit mindestens einem freien Elektronenpaar. Besonders gut geeignet sind Lewisbasen deren freies Elektronenpaar oder deren freie Elektronenpaare sich an einem Stickstoff- oder Sauerstoffatom befinden, also beispielsweise Nitrile, R-CN, Ketone, Ether, Alkohole oder Wasser. Vorzugsweise verwendet man C₁- bis C₁₀-Nitrile wie Acetonitril, Propionitril, Benzonitril oder C₂- bis C₁₀-Ketone wie Aceton, Acetylaceton oder aber C₂- bis C₁₀-Ether, wie Dimethylether, Diethylether, Tetrahydrofuran. Insbesondere verwendet man Acetonitril oder Tetrahydrofuran.

Grundsätzlich können die Liganden L¹ und L² in jeder beliebigen Ligandkombination vorliegen, d.h. der Metallkomplex (I) kann zum Beispiel einen Nitrat- und einen Acetatrest, einen p-Toluolsulfonat- und einen Acetatrest oder einen Nitrat- und einen formal geladenen organischen Liganden wie t-Butyl enthalten. Bevorzugt liegen in den Metallkomplexen L¹ und L² als identische Liganden vor.

Je nach formaler Ladung des das Metall M enthaltenden Komplexfragments enthalten die Metallkomplexe Anionen X. Ist das M-enthaltende Komplexfragment formal ungeladen, so enthält der erfindungsgemäße Komplex (I) jedoch kein Anion X. Vorteilhafterweise werden Anionen X eingesetzt, die möglichst wenig nucleophil sind, d.h. eine möglichst geringe Tendenz haben, mit dem Zentralmetall M eine chemische Bindung einzugehen.

Geeignete Anionen X sind beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren wie zum Beispiel Methylsulfonat, Trifluormethylsulfonat und para-Toluolsulfonat, weiterhin Tetrafluoroborat, Tetraphenylborat, Tetrakis(pentafluorophenyl)borat, Tetrakis [bis(3,5-trifluormethyl)phenyl]borat, Hexafluorophosphat, Hexafluoroarsenat oder Hexafluoroantimonat. Vorzugsweise verwendet man Perchlorat, Trifluoracetat, Sulfonate wie Methylsulfonat, Trifluormethylsulfonat, p-Toluolsulfonat, Tetrakis[bis(3,5-trifluormethyl)phenyl]borat, Tetrafluoroborat oder Hexafluorophosphat und insbesondere Trifluormethylsulfonat, Trifluoracetat, Perchlorat oder p-Toluolsulfonat.

Als definierte Übergangsmetallkomplexe sind zum Beispiel geeignet:
[1,3-Bis(di-5-hydroxypentyl)phospinopropan]palladium(II)- acetat,
[1,3-Bis(di-6-hydroxyhexyl)phosphino-propan]palladium (II) acetat,
[1,3-Bis(di(3-hydroxycyclopentyl)propyl)phosphinopropan]palladium (II)acetat,
[1,3-Bis(di-8-hydroxyoctyl)phospinopropan]palladium(II)acetat und
[1,3-Bis(di(3-hydroxycyclohexyl)propyl)phospinopropan]palladium(II)acetat.

Die beschriebenen Übergangsmetallkomplexe sind zumindest in geringen Teilen in Wasser löslich. In der Regel sind diese Metallkomplexe gut bis sehr gut in Wasser löslich.

Definierte Übergangsmetallkomplexe (I) können nach folgenden Verfahren hergestellt werden.

Die Herstellung erfolgt für die neutralen Chelatkomplexe (p = 0) durch Austausch von schwach koordinierenden Liganden, wie zum Beispiel 1,5-Cyclooctadien, Benzonitril oder Tetramethylethylendiamin, die an die entsprechenden Übergangsmetallverbindungen, beispielsweise Übergangsmetall-Halogenide, Übergangsmetall-(Alkyl)(Halogenide), Übergangsmetall-Diorganyle, gebunden sind, gegen die erfindungsgemäßen Chelatliganden der allgemeinen Formel (III) in der vorhergehend beschriebenen Bedeutung.

Die Reaktion wird im allgemeinen in einem polaren Lösungsmittel, wie beispielsweise Acetonitril, Aceton, Ethanol, Diethylether, Dichlormethan oder Tetrahydrofuran oder deren Gemischen bei Temperaturen im Bereich von -78 bis +60°C durchgeführt.

Des weiteren können neutrale Metallkomplexe (I), in denen L¹ und L² Carboxylat, z.B. Acetat, bedeuten, durch Umsetzung von Übergangsmetallsalzen wie beispielsweise Pd(OAc)₂ mit den beschriebenen Chelatliganden (III) in Acetonitril, Aceton, Ethanol, Diethylether, Dichlormethan, Tetrahydrofuran oder Wasser bei Raumtemperatur hergestellt werden. Auch Lösungsmittelgemische können dabei verwendet werden.

Als weitere Synthesemethode kommt die Umsetzung der Chelatkomplexe der allgemeinen Formel (I) mit Organometallverbindungen der Gruppen IA, IIA, IVA und IIB in Frage, beispielsweise C₁- bis C₆-Alkyle der Metalle Lithium, Aluminium, Magnesium, Zinn, Zink, wobei formal geladene anorganische Liganden L¹, L^{2,} wie vorher definiert, gegen formal geladene aliphatische, cycloaliphatische oder aromatische Liganden L¹, L^{2,} wie ebenfalls vorher definiert, ausgetauscht werden. Die Reaktion wird im allgemeinen in einem Lösungsmittel wie beispielsweise Diethylether oder Tetrahydrofuran bei Temperaturen im Bereich von -78 bis 65°C durchgeführt.

Monokationische Komplexe der allgemeinen Formel (I) (p=1) können zum Beispiel durch Umsetzung von (Chelatligand) Metall (Acetat)(Organo)- oder (Chelatligand) Metall (Halogeno)(Organo)-Komplexen mit stöchiometrischen Mengen eines Metallsalzes M'X erhalten werden. Die Umsetzungen werden im allgemeinen in koordinierenden Lösungsmitteln wie beispielsweise Acetonitril, Benzonitril oder Tetrahydrofuran bei Temperaturen im Bereich von -78 bis 65°C durchgeführt.

Es ist vorteilhaft, wenn die Metallsalze M'X folgende Kriterien erfüllen. Das Metall M' soll vorzugsweise schwer lösliche Metallchloride bilden, wie zum Beispiel Silberchlorid. Das Salz-Anion soll vorzugsweise ein nicht-nucleophiles Anion X, wie vorher definiert, sein.

Gut geeignete Salze für die Bildung von kationischen Komplexen sind Silbertetrafluoroborat, Silberhexafluorophosphat, Silbertrifluormethansulfonat, Silberperchlorat, Silberparatoluolsulfonat, Silbertrifluoracetat und Silbertrichloracetat.

Die dikationischen Komplexe (p = 2) werden analog den monokationischen Komplexen hergestellt, nur daß jetzt anstatt der (Chelatligand)Metall(Acetat)(Organo)- oder der (Chelatligand)Metall(Halogene)(Organo)-Komplexe die (Chelatligand)Metall(diacetat) -bzw. (Chelatligand)Metall(di-Halogeno)-Komplexe als Vorstufe eingesetzt werden.

Als weiteres Verfahren zur Herstellung der dikationischen Komplexe (I) kommt die Umsetzung von [Q₄M]X₂ mit den eingangs definierten Chelatliganden der allgemeinen Formel (III) in Frage. Hierbei bedeutet Q gleiche oder unterschiedliche schwache Liganden wie beispielsweise Acetonitril, Benzonitril oder 1,5-Cyclooctadien, M und X haben die vorher definierte Bedeutung.

Ein bevorzugtes Verfahren zur Herstellung der Metallkomplexe der allgemeinen Formel (I) ist die Umsetzung der Dihalogenmetallvorläuferkomplexe mit Silbersalzen enthaltend nicht-koordinierende Anionen.

Die erfindungsgemäßen wasserlöslichen Übergangsmetallkomplexe können als wesentlicher Bestandteil eines Katalysatorsystems für die Copolymerisation von Kohlenmonoxid und α-olefinisch ungesättigten Verbindungen insbesondere in wässrigen Medien verwendet werden. Als weiterer Bestandteil des Katalysatorsystems kann als Aktivatorkomponente eine Lewis- oder Protonensäure verwendet werden.

Die erfindungsgemäßen wasserlöslichen Übergangsmetallkomplexe verfügen auch nach mehreren Stunden Reaktionszeit über eine gleichbleibend hohe mittlere Katalysatoraktivität.

Die vorliegende Erfindung wird anhand der nachfolgenden Beispiele näher erläutert.

### Beispiele

### I) Darstellung der Chelatligandverbindungen

### Allgemeine Vorgehensweise

### i) Herstellung von 1,3-Bis(di-ethylphosphonit)propan

Zu 1,3-Dibrompropan (102,5 ml) gab man Triethylphosphit (696 ml) und erwärmte langsam auf 140°C. Das sich bildende Bromethan wurde destillativ entfernt. Nach Abschwächung der Bromethanfreisetzung wurde die Reaktionstemperatur auf 155°C erhöht und die Reaktion für 24 h bei dieser Temperatur gehalten. Es wurde weiteres Triethylphosphit (696 ml) zugetropft und die Reaktion nach weiteren 24 h durch destillative Abtrennung überschüssigen Triethylphosphits abgebrochen. Monosubstituiertes Produkt wurde destillativ bei 150°C im Hochvakuum entfernt. Der verbleibende Destillationsrückstand stellte 1,3-Bis(di-ethylphosphonit)propan dar. Ausbeute: 86 %.

### ii) Herstellung von 1,3-Diphosphinopropan

Eine Lösung von 1,3-Bis(di-ethylphosphonit)propan (103,3 g) in absolutiertem Diethylether (100 ml) wurde langsam bei 0°C zu einer Suspension von LiAlH₄ (25 g) in Diethylether (200 ml) gegeben. Nach Beendigung der Zugabe wurde die Reaktionstemperatur auf Raumtemperatur gebracht und die Reaktion für 16 h bei dieser Temperatur gerührt. Zur Hydrolyse überschüssigen LiAlH₄ wurde entgaste und mit Argon gesättigte 6 molare Salzsäure langsam zugegeben. Die abgetrennte organische Phase wurde über Natriumsulfat getrocknet. Die wässrige Phase wurde mit Diethylether durchmischt, die Diethyletherphase nach Phasentrennung über Natriumsulfat getrocknet und mit der vorgenannten organischen Phase vereinigt. 1,3-Diphosphinpropan konnte bei 140°C unter Normaldruck destillativ gewonnen werden. Ausbeute: 61 %.

### iii) Herstellung wasserlöslicher Chelatligandverbindungen

Bis(di-7-hydroxyheptyl)phosphinopropan, 1,3-Diphosphinpropan (1,08 g) und 6-Hepten-1-ol (44 mmol), das mehrfach entgast und mit Argon gesättigt wurde, wurden in einem Quarzschlenkrohr für 24 h dem UV-Licht einer Hg-Hochdrucklampe ausgesetzt. Bei höheren Olefinen wurde das Reaktionsgefäß zusätzlich erwärmt, um die Viskosität des Reaktionsgemisches zu vermindern. Durch destillative Abtrennung der überschüssigen Olefinkomponente wurde die gewünschte Chelatligandverbindung annähernd quantitativ erhalten.

Bis(di-5-hydroxypentyl)-, Bis(di-6-hydroxyhexyl)-, Bis(di-8-hydroxyoctyl)- und Bis(di(3-hydroxycyclopentyl)propyl)phosphinopropan wurden analog der vorgenannten Vorschrift erhalten.

Die Ausgangsverbindungen 1-Pentenol, 1-Hexenol und 3-Hydroxy-3-cylopentyl-propen wurden wie folgt erhalten:

4-Penten-1-ol wurde mittels LiAlH₄-Reduktion aus 4-Pentensäure, kommerziell erhältlich über die Fa. Aldrich, hergestellt. Analog wurden 6-Hepten- und 7-Oktensäure in 6-Hepten-1-ol bzw. 7-Okten-1-ol überführt.

5-Hexen-1-ol wurde von der Fa. Fluka bezogen und ohne weitere Aufreinigung eingesetzt.

3-Hydroxy-3-cyclopentylpropen wurde aus Allylmagnesiumchlorid und Cyclopentan über eine Grignard-Reaktion hergestellt.

### II) Darstellung definierter Übergangsmetallkomplexe

### i) Darstellung von [1,3-Bis(di-5-hydroxypentyl)phosphinopropan]palladium(II)acetat

0,9 g 1,3-Bis(di-5-hydroxypentyl)phophinopropan wurden in 10 ml mehrfach entgastem und mit Argon gesättigtem Ethanol gelöst und langsam zu einer Lösung von Palladium(II)acetat (0,44 g in 15 ml entgastem, mit Argon gesättigtem Acetonitril) getropft. Zur Vervollständigung der Reaktion wurde bei Raumtemperatur noch 20 Min gerührt. Das Lösemittelgemisch wurde im Vakuum entfernt und der definierte Pd-Komplex als braungelbes, hochviskoses Öl isoliert.

### ii) Darstellung von [1,3-Bis(di-6-hydroxyhexyl)phosphinopropan]palladium(II)-acetat

Die Reaktion wurde analog II) i) durchgeführt. Als Chelatligand wurde 1,3-Bis(di-6-hydroxyhexyl)phosphinopropan eingesetzt.

### iii) Darstellung von [1,3-Bis(di(3-hydroxycyclopentyl)propyl)phosphinopropan] palladium(II)acetat

Zu einer Lösung von 0,25 g Palladium(II)acetat in 20 ml Acetonitril tropfte man bei Raumtemperatur eine Mischung von 1,3-Bis(di(3-hydroxycyclopentyl)propyl)phosphinopropan in 20 ml Dichlormethan. Nach Rühren bei Raumtemperatur für 16 h wurde das Lösemittelgemisch im Vakuum entfernt. Der gewünschte Pd-Komplex wurde als roter Feststoff isoliert.

## Patentansprüche

1. Verwendung wasserlöslicher Übergangsmetallkomplexe der allgemeinen Formel (I) 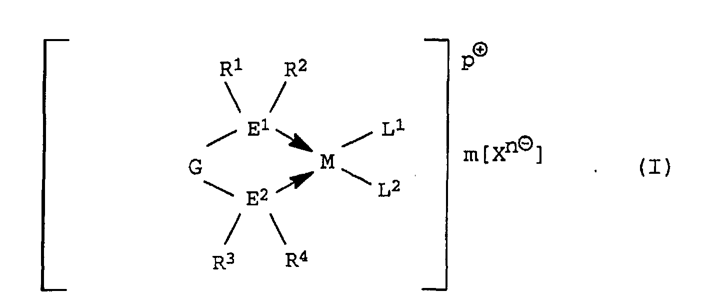 in der die Substituenten und Indizes die folgende Bedeutung haben:
G -(CR^{b}₂)ᵣ-, -(CR^{b}₂)ₛ-Si(R^{a})₂-(CR^{b}₂)ₜ-, -A'-O-B'- oder -A'-Z(R⁵)-B'- mit
R⁵ Wasserstoff, unsubstituiertes oder mit funktionellen Gruppen auf der Basis der Elemente der Gruppen IVA, VA, VIA oder VIIA des Periodensystems der Elemente substituiertes C₁- bis C₂₈-Alkyl, C₃- bis C₁₄-Cycloalkyl, C₆- bis C₁₅-Aryl oder Alkylaryl mit 1 bis 20 C-Atomen im Alkylrest und 6 bis 15 C-Atomen im Arylrest, -N(R^{b})₂, -Si(R^{c})₃ oder einen Rest der allgemeinen Formel II 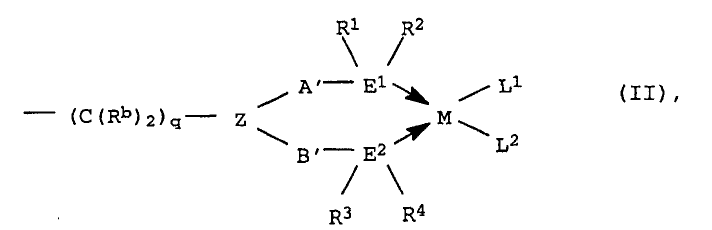
in der
q eine ganze Zahl von 0 bis 20 bedeutet und die weiteren Substituenten in (II) die gleiche Bedeutung wie in (I) haben,
A', B' -(CR^{b}₂)ᵣ,-, -(CR^{b}₂)ₛ-Si(R^{a})₂-(CR^{b}₂)ₜ-, -N(R^{b})-, ein r'-, s- oder t-atomiger Bestandteil eines Ringsystems oder zusammen mit Z ein (r'+1)-, (s+1)- oder (t+1)-atomiger Bestandteil eines Heterocyclus,
R^{a} unabhängig voneinander C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil,
R^{b} wie R^{a} oder Wasserstoff oder Si(R^{c})₃,
R^{c} C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil,
r 1, 2, 3 oder 4 und
r' 1 oder 2,
s, t 0, 1 oder 2, wobei 1 ≤ s+t ≤ 3
Z ein nichtmetallisches Element aus der Gruppe VA des Periodensystems der Elemente,
M ein Metall, ausgewählt aus den Gruppen VIIIB, IB oder IIB des Periodensystems der Elemente,
E¹, E² ein nichtmetallisches Element aus der Gruppe VA des Periodensystems der Elemente,
R¹ bis R⁴ mit mindestens einer polaren protonenaktiven oder ionischen funktionellen Gruppe auf der Basis von nichtmetallischen Elementen der Gruppen IVA bis VIA des Periodensystems der Elemente substituiertes lineares oder verzweigtes C₂- bis C₂₈-Alkyl, C₃- bis C₁₄-Cycloalkyl oder Alkylaryl mit 1 bis 28 C-Atomen im Alkylteil und 6 bis 15 C-Atomen im Arylteil,
L¹, L² formal geladene oder neutrale Liganden,
X formal ein- oder mehrwertige Anionen,
p 0, 1, 2, 3 oder 4,
m, n 0, 1, 2, 3 oder 4,
wobei p = m x n,
für die Herstellung von linearen, alternierenden Copolymeren aus Kohlenmonoxid und α-olefinisch ungesättigten Verbindungen.

2. Verwendung wasserlöslicher Übergangsmetallkomplexe nach Anspruch 1, **dadurch gekennzeichnet, daß** die Substituenten und Indizes in Verbindungen der allgemeinen Formel (I) die folgende Bedeutung haben:
G -(CR^{b}₂)ᵣ- oder -(CR^{b}₂)-N(R⁵)-(CR^{b}₂)-, worin
R^{b} Wasserstoff, C₁- bis C₁₀-Alkyl oder C₆- bis C₁₀-Aryl,
r 1, 2, 3 oder 4,
R⁵ Wasserstoff, C₁- bis C₁₀-Alkyl, C₃- bis C₁₀-Cycloalkyl, C₆- bis C₁₅-Aryl, mit funktionellen Gruppen auf Basis der Elemente der Gruppen IVA, VA, VIA, VIIA des Periodensystems der Elemente substituiertes C₁- bis C₁₀-Alkyl, C₃- bis C₁₀-Cycloalkyl oder C₆- bis C₁₅-Aryl,
M Palladium oder Nickel
E¹, E² Phosphor,
R¹ bis R⁴ lineare, verzweigte oder Carbocyclen enthaltende C₂- bis C₂₈-Alkyleinheiten oder C₃- bis C₁₄-Cycloalkyleinheiten, die über mindestens eine endständige oder interne Hydroxy-, Amino-, Carbonsäure-, Phosphorsäure-, Ammonium- oder Sulfonsäuregruppe verfügen, oder eine Alkylarylgruppe mit 1 bis 28 C-Atomen im Alkylteil und 6 bis 15 C-Atomen im Arylteil, wobei der Alkyl- oder Arylteil mit mindestens einer Hydroxy-, Carbonsäure-, Aminosäure-, Phosphorsäure-, Sulfonsäure- oder Ammoniumgruppe substituiert ist,
L¹, L² Acetat, Trifluoracetat, Tosylat oder Halogenide, mit
p, m, n 0.

3. Verwendung wasserlöslicher Metallkomplexe nach den Ansprüchen 1 oder 2, **dadurch gekennzeichnet, daß** die Reste R¹ bis R⁴ lineare, verzweigte oder Carbocyclen enthaltende C₂- bis C₂₈-Alkyleinheiten oder C₃- bis C₁₄-Cycloalkyleinheiten, die über mindestens eine endständige oder interne Hydroxy-, Amino-, Carbonsäure-, Phosphorsäure-, Ammonium- oder Sulfonsäuregruppe verfügen, oder eine Alkylarylgruppe mit 1 bis 28 C-Atomen im Alkylteil und 6 bis 15 C-Atomen im Arylteil, wobei der Alkyl- oder Arylteil mit mindestens einer Hydroxy-, Aminosäure-, Carbonsäure-, Phosphorsäure-, Ammonium- oder Sulfonsäuregruppe substituiert ist, bedeuten.

4. Verfahren zur Herstellung wasserlöslicher Chelatliganden der allgemeinen Formel (III)
(R¹)(R²)E¹-G-E²(R³)(R⁴) (III)
in der die Substituenten und Indizes die folgende Bedeutung haben:
G -(CR^{b}₂)ᵣ- oder -(CR^{b}₂)-N-(R⁵)-(CR^{b}₂)-, worin
R^{b} Wasserstoff, C₁- bis C₂₀-Alkyl oder C₆- bis C₁₅-Aryl,
r 1, 2, 3 oder 4,
R⁵ Wasserstoff, C₁- bis C₂₈-Alkyl, C₃- bis C₁₄-Cycloalkyl, C₆- bis C₁₅-Aryl, mit funktionellen Gruppen auf der Basis der Elemente der Gruppen IVA, VA, VIA oder VIIA des Periodensystems der Elemente substituiertes C₁- bis C₂₈-Alkyl, C₃- bis C₁₄-Cycloalkyl, C₆- bis C₁₅-Aryl,
E¹, E² Phosphor,
R¹ bis R⁴ lineare, verzweigte oder Carbocyclen enthaltende C₂- bis C₂₈-Alkyleinheiten oder C₃- bis C₁₄-Cycloalkyleinheiten, die über mindestens eine endständige oder interne Hydroxy-, Amino-, Carbonsäure-, Phosphorsäure-, Ammonium- oder Sulfonsäuregruppe verfügen, oder eine Alkylarylgruppe mit 1 bis 28 C-Atomen im Alkylteil und 6 bis 15 C-Atomen im Arylteil, wobei der Alkyl- oder Arylteil mit mindestens einer Hydroxy-, Carbonsäure-, Aminosäure-, Phosphorsäure-, Ammonium- oder Sulfonsäuregruppe substituiert ist,
**dadurch gekennzeichnet, daß** man
a) eine Verbindung der allgemeinen Formel (IIIa))
L-(CR^{b} ₂)ᵣ-L oder L-(CR^{b} ₂)-N(R⁵)-(CR^{b} ₂)-L (IIIa)),
worin
R^{b} Wasserstoff, C₁- bis C₂₀-Alkyl oder C₆- bis C₁₅-Aryl,
r 1, 2, 3 oder 4,
R⁵ Wasserstoff, C₁- bis C₂₈-Alkyl, C₃- bis C₁₄-Cycloalkyl, C₆- bis C₁₅-Aryl, mit funktionellen Gruppen auf Basis der Elemente der Gruppen IVA, VI, VIA, VIIA des Periodensystems der Elemente substituiertes C₁- bis C₂₈-Alkyl, C₃- bis C₁₄-Cycloalkyl oder C₆- bis C₁₅-Aryl und
L unabhängig voneinander Chlorid, Bromid oder Iodid bedeuten,
mittels Arbuzov-Reaktion mit Trialkoxyphosphinen in Verbindungen der allgemeinen Formel (IIIb) überführt, in denen
L P(L')₃ bedeutet, mit
L' O-C₁- bis O-C₆-Alkyl, O-C₆- bis O-C₁₀-Aryl oder OAlkylaryl mit 1 bis 6 C-Atomen im Alkyl- und 6 bis 20 C-Atomen im Arylteil,
b) die Verbindung (IIIb) reduktiv in die Verbindung der allgemeinen Formel (IIIc) überführt, in der L' für Wasserstoff steht, und
c) die Verbindung der Formel (IIIc) in Gegenwart von mindestens vier Äquivalenten an olefinisch ungesättigter Verbindung, welche über mindestens eine polare protonenaktive oder ionische funktionelle Gruppe auf der Basis von nichtmetallischen Elementen der Gruppen IVA bis VIA des Periodensystems der Elemente verfügt, radikalisch polymerisiert.

5. Verfahren nach Anspruch 4, **dadurch gekennzeichnet, daß** man als olefinisch ungesättigte Verbindung eine solche der Formel (IVa)
CH₂=C(R^{d})-(CR^{d} ₂)ₖ₋₁-(T)₁-(CR^{d} ₂)_{k'}-Y
verwendet, in der die Substituenten und Indizes die folgende Bedeutung haben:
R^{d} unabhängig voneinander Wasserstoff, C₁- bis C₂₀-Alkyl, C₃- bis C₁₀-Cycloalkyl, C₆- bis C₁₅-Aryl oder Alkylaryl mit 1 bis 10 C-Atomen im Alkylteil und 6 bis 15 C-Atomen im Arylteil sowie zusätzlich Y,
T C₃- bis C₁₀-Cycloalkylen, insbesondere C₃- bis C₆-Cycloalkylen, oder C₆- bis C₁₅-Arylen, insbesondere C₆- bis C₁₀-Arylen, gegebenenfalls substituiert mit R^{d} oder Y,
k 1 bis 20, falls 1 = 0 oder 1 = 1 und T = Cycloalkyl und 2 bis 20, falls 1 = 1 und T = Aryl,
k' 0 bis 20,
l 0 oder 1 und
Y eine polare protonenaktive oder ionische funktionelle Gruppe auf der Basis von Elementen der Gruppen IVA bis VIA des Periodensystems der Elemente.

## Claims

1. The use of a water-soluble transition metal complex of the formula (I) 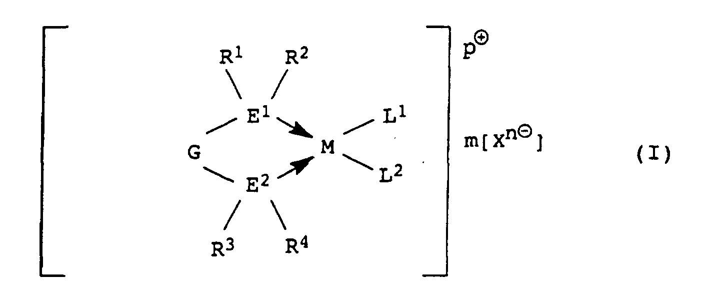 where
G is -(CR^{b}₂)ᵣ-, -(CR^{b}₂)ₛ-Si(R^{a})₂-(CR^{b}₂)ₜ-, -A'-O-B'- or -A'-Z(R⁵)-B'- where
R⁵ is hydrogen or is C₁- to C₂₈-alkyl, C₃- to C₁₄-cycloalkyl, C₆- to C₁₅-aryl or alkylaryl where the alkyl radical is of 1 to 20 carbon atoms and the aryl radical is of 6 to 15 carbon atoms, each of which is unsubstituted or substituted by functional groups based on elements of groups IVA, VA, VIA or VIIA of the Periodic Table of the Elements, or is -N(R^{b})₂, -Si(R^{c})₃ or a radical of the formula (II) 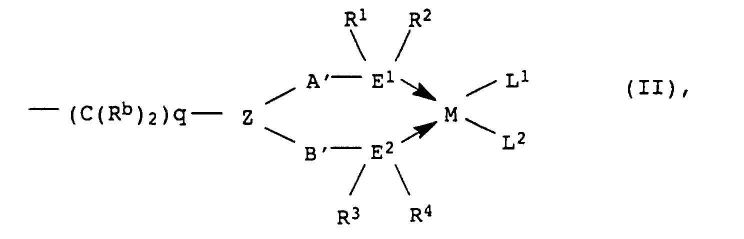
where
q is an integer from 0 to 20 and the further substituents in (II) have the same meanings as in (I),
A' and B' are each -(CR^{b}₂)_{r'}-, -(CR^{b}₂)ₛ-Si(R^{a})₂-(CR^{b}₂)ₜ-, -N(R^{b})-, an r'-, s- or t-atom component of a ring system or, together with Z, an (r'+1)-, (s+1)- or (t+1)-atom component of a heterocyclic structure,
R^{a}, independently of one another, are each C₁- to C₂₀-alkyl, C₃- to C₁₀-cycloalkyl, C₆- to C₁₅-aryl or alkylaryl where the alkyl moiety is of 1 to 10 carbon atoms and the aryl moiety is of 6 to 15 carbon atoms,
R^{b} is the same as R^{a} or is hydrogen or Si(R^{c})₃,
R^{c} is C₁- to C₂₀-alkyl, C₃- to C₁₀-cycloalkyl, C₆- to C₁₅-aryl or alkylaryl where the alkyl moiety is of 1 to 10 carbon atoms and the aryl moiety is of 6 to 15 carbon atoms,
r is 1, 2, 3 or 4,
r' is 1 or 2,
s and t are each 0, 1 or 2, where 1 ≤ s+t ≤ 3,
Z is a nonmetallic element from group VA of the Periodic Table of Elements,
M is a metal selected from the groups VIIIB, IB or IIB of the Periodic Table of Elements,
E¹ and E² are each a nonmetallic element from group VA of the Periodic Table of Elements,
R¹ to R⁴ are each linear or branched C₂- to C₂₈-alkyl, C₃to C₁₄-cycloalkyl or alkylaryl where the alkyl moiety is of 1 to 28 carbon atoms and the aryl moiety is of 6 to 15 carbon atoms, each of which is substituted by at least one polar protic or ionic functional group based on nonmetallic elements of groups IVA to VIA of the Periodic Table of Elements,
L¹ and L² are formally charged or neutral ligands,
X are formally monovalent or polyvalent anions,
p is 0, 1, 2, 3 or 4,
m and n are each 0, 1, 2, 3 or 4,
where p = m x n,
for the preparation of linear, alternating copolymers of carbon monoxide and α-olefinically unsaturated compounds.

2. The use of a water-soluble transition metal complex as claimed in claim 1, wherein
G is -(CR^{b}₂)ᵣ- or -(CR^{b}₂)-N(R⁵)-(CR^{b}₂)-, where
R^{b} is hydrogen, C₁- to C₁₀-alkyl or C₆- to C₁₀-aryl,
r is 1, 2, 3 or 4,
R⁵ is hydrogen, C₁- to C₁₀-alkyl, C₃- to C₁₀-cycloalkyl, C₆- to C₁₅-aryl or C₁- to C₁₀-alkyl, C₃- to C₁₀-cycloalkyl or C₆- to C₁₅-aryl, which is substituted by functional groups based on elements of groups IVA, VA, VIA and VIIA of the Periodic Table of Elements,
M is palladium or nickel,
E¹ and E² are each phosphorus,
R¹ to R⁴ are linear, branched or carbocycle-containing C₂- to C₂₈-alkyl units or C₃- to C₁₄-cycloalkyl units which have at least one terminal or internal hydroxyl, amino, carboxyl, phosphoric acid, ammonium or sulfo group, or alkylaryl where the alkyl moiety is of 1 to 28 carbon atoms and the aryl moiety is of 6 to 15 carbon atoms, the alkyl or aryl moiety being substituted by at least one hydroxyl, carboxyl, amino acid, phosphoric acid, sulfo or ammonium group,
L¹ and L² are each acetate, trifluoroacetate, tosylate or halide, and
p, m, n are each 0.

3. The use of a water-soluble metal complex as claimed in claim 1 or 2, wherein R¹ to R⁴ are linear, branched or carbocycle-containing C₂- to C₂₈-alkyl units or C₃- to C₁₄-cycloalkyl units which have at least one terminal or internal hydroxyl, amino, carboxyl, phosphoric acid, ammonium or sulfo group, or are each alkylaryl where the alkyl moiety is of 1 to 28 carbon atoms and the aryl moiety is of 6 to 15 carbon atoms, the alkyl or aryl moiety being substituted by at least one hydroxyl, amino acid, carboxyl, phosphoric acid, ammonium or sulfo group.

4. A process for the preparation of a water-soluble chelate ligand of the formula (III)
(R¹)(R²)E¹-G-E²(R³)(R⁴) (III)
where
G is -(CR^{b}₂)ᵣ- or -(CR^{b}₂)-N-(R⁵)-(CR^{b}₂)-, where
R^{b} is hydrogen, C₁- to C₂₀-alkyl or C₆- to C₁₅-aryl,
r is 1, 2, 3 or 4,
R⁵ is hydrogen, C₁- to C₂₈-alkyl, C₃- to C₁₄-cycloalkyl, C₆- to C₁₅-aryl or C₁- to C₂₈-alkyl, C₃- to C₁₄-cycloalkyl or C₆- to C₁₅-aryl, which is substituted by functional groups based on elements of groups IVA, VA, VIA and VIIA of the Periodic Table of Elements,
E¹ and E² are each phosphorus,
R¹ to R⁴ are linear, branched or carbocycle-containing C₂- to C₂₈-alkyl units or C₃- to C₁₄-cycloalkyl units which have at least one terminal or internal hydroxyl, amino, carboxyl, phosphoric acid, ammonium or sulfo group, or alkylaryl where the alkyl moiety is of 1 to 28 carbon atoms and the aryl moiety is of 6 to 15 carbon atoms, the alkyl or aryl moiety being substituted by at least one hydroxyl, carboxyl, amino acid, phosphoric acid, ammonium or sulfo group,
wherein
a) a compound of the formula (IIIa)
L-(CR^{b} ₂)ᵣ-L or L-(CR^{b} ₂)-N(R⁵)-(CR^{b} ₂)-L (IIIa),
where
R^{b} is hydrogen, C₁- to C₂₀-alkyl or C₆- to C₁₅-aryl,
r is 1, 2, 3 or 4,
R⁵ is hydrogen, C₁- to C₂₈-alkyl, C₃- to C₁₄-cycloalkyl, C₆- to C₁₅-aryl or C₁- to C₂₈-alkyl, C₃- to C₁₄-cycloalkyl or C₆- to C₁₅-aryl substituted by functional groups based on the elements of groups IVA, VA, VIA and VIIA of the Periodic Table of Elements and
L, independently of one another, are each chloride, bromide or iodide,
is converted by means of an Arbuzov reaction with a trialkoxyphosphine into a compound of the formula (IIIb) where
L is P(L')₃ and
L' is O-C₁- to O-C₆-alkyl, O-C₆- to O-C₁₀-aryl or O-alkylaryl where the alkyl moiety is of 1 to 6 carbon atoms and the aryl moiety is of 6 to 20 carbon atoms,
b) the compound (IIIb) is reduced to the compound of the formula (IIIc), where L' is hydrogen, and
c) the compound of the formula (IIIc) is subjected to free radical polymerization in the presence of at least four equivalents of an olefinically unsaturated compound which has at least one polar protic or ionic functional group based on nonmetallic elements of groups IVA to VIA of the Periodic Table of Elements.

5. The process as claimed in claim 4, wherein the olefinically unsaturated compound used is one of the formula (IVa)
CH₂=C(R^{d})-(CR^{d} ₂)ₖ₋₁-(T)₁-(CR^{d} ₂)_{k'}-Y
where
R^{d}, independently of one another, are each hydrogen, C₁- to C₂₀-alkyl, C₃- to C₁₀-cycloalkyl, C₆- to C₁₅-aryl or alkylaryl where the alkyl moiety is of 1 to 10 carbon atoms and the aryl moiety is of 6 to 15 carbon atoms, and additionally Y,
T is C₃- to C₁₀-cycloalkylene, in particular C₃- to C₆-cycloalkylene, or C₆- to C₁₅-arylene, in particular C₆- to C₁₀-arylene, unsubstituted or substituted by R^{d} or Y,
k is from 1 to 20, if 1 = 0 or 1 = 1 and
T = cycloalkyl, and 2 to 20, if 1 = 1 and
T = aryl,
k' is from 0 to 20,
l is 0 or 1 and
Y is a polar proton-active or ionic functional group based on elements of groups IVA to VIA of the Periodic Table of Elements.

## Revendications

1. Mise en oeuvre de complexes de métaux de transition solubles dans l'eau de formule générale (I) 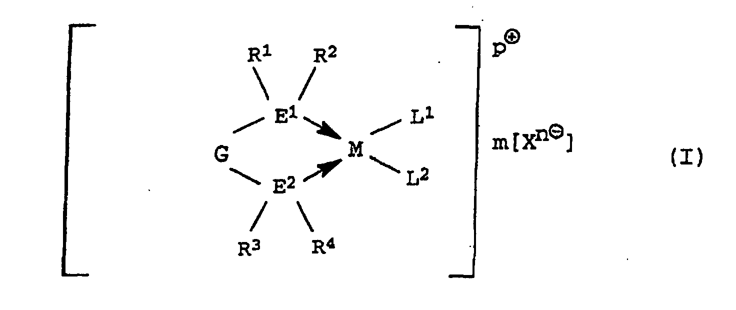 dans laquelle les substituants et les exposants prennent les significations suivantes :
G représente -(CR^{b}₂)ᵣ-, -(CR^{b}₂)ₛ-Si(R^{a})₂-(CR^{b}₂)ₜ-, -A'-O-B'- ou -A'-Z(R⁵)-B'-, où
R⁵ représente un atome d'hydrogène, un groupe alkyle en C₁ à C₂₈, cycloalkyle en C₃ à C₁₄, aryle en C₆ à C₁₅ ou alkylaryle ayant de 1 à 20 atomes de C dans son reste alkyle et de 6 à 15 atomes de C dans son reste aryle, non substitué ou substitué par des groupes fonctionnels à base d'éléments des groupes IVA, VA, VIA ou VIIA de la Classification Périodique des Eléments, -N(R^{b})₂, -Si(R^{C})₃ ou un reste de formule générale II 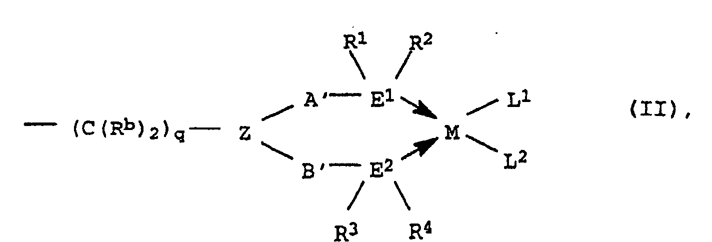
dans laquelle
q représente un nombre entier compris entre 0 et 20 et les autres substituants dans (II) prennent la signification précitée dans (I),
A', B' représentent -(CR^{b}₂)_{r'}-, -(CR^{b}₂)ₛ-Si(R^{a})₂-(CR^{b}₂)t-, -N(R^{b})-, ou une partie d'un système cyclique constituée de r', s ou t atomes, ou bien ils représentent, conjointement avec Z, une partie d'un hétérocycle constituée de (r'+1), (s+1) ou (t+1) atomes,
R^{a} représentent indépendamment l'un de l'autre un groupe alkyle en C₁ à C₂₀, cycloalkyle en C₃ à C₁₀, aryle en C₆ à C₁₅ ou alkylaryle ayant de 1 à 10 atomes de C dans son groupe alkyle et de 6 à 15 atomes de C dans son groupe aryle,
R^{b} prend la signification précitée pour R^{a} ou représente un atome d'hydrogène ou Si(R^{C})₃,
R^{c} représente un groupe alkyle en C₁ à C₂₀, cycloalkyle en C₃ à C₁₀, aryle en C₆ à C₁₅ ou alkylaryle ayant de 1 à 10 atomes de C dans son groupe alkyle et de 6 à 15 atomes de C dans son groupe aryle,
r vaut 1, 2, 3 ou 4 et
r' vaut 1 ou 2,
s, t valent 0, 1 ou 2, et 1 ≤ s+t ≤ 3,
Z représente un atome d'un élément non métallique du groupe VA de la Classification Périodique des Eléments,
M représente un atome d'un métal choisi dans les groupes VIIIB, IB ou IIB de la Classification Périodique des Eléments,
E¹, E² représentent un atome d'un élément non métallique du groupe VA de la Classification Périodique des Eléments,
R¹ à R⁴ représentent un groupe alkyle en C₂ à C₂₈ ramifié ou linéaire, cycloalkyle en C₃ à C₁₄ ou alkylaryle ayant de 1 à 28 atomes de C dans son groupe alkyle et de 6 à 15 atomes de C dans son groupe aryle, substitué par au moins un groupe fonctionnel ionique ou polaire à activité protonique à base d'éléments non métalliques des groupes IVA à VIA de la Classification Périodique des Eléments,
L¹, L² représentent un ligand formellement chargé ou neutre,
X représente un anion formellement monovalent ou polyvalent,
p vaut 0, 1, 2, 3 ou 4,
m, n valent 0, 1, 2, 3 ou 4,
où p = m x n,
pour la préparation de copolymères linéaires alternés constitués du monoxyde de carbone et de composés à insaturation α-oléfinique.

2. Mise en oeuvre de complexes de métaux de transition solubles dans l'eau selon la revendication 1, **caractérisée en ce que** les substituants et les exposants des composants prennent, dans la formule générale (I), les significations suivantes :
G représente -(CR^{b}₂)ᵣ- ou -(CR^{b}₂)-N(R⁵)-(CR^{b}₂)- où
R^{b} représente un atome d'hydrogène, un groupe alkyle en C₁ à C₁₀ ou aryle en C₆ à C₁₀,
r vaut 1, 2, 3 ou 4 et
R⁵ représente un atome d'hydrogène, un groupe alkyle en C₁ à C₁₀, cycloalkyle en C₃ à C₁₀, aryle en C₆ à C₁₅, ou bien un groupe alkyle en C₁ à C₁₀, cycloalkyle en C₃ à C₁₀, aryle en C₆ à C₁₅ substitué par des groupes fonctionnels à base d'éléments des groupes IVA, VA, VIA ou VIIA de la Classification Périodique des Eléments,
M représente un atome de palladium ou de nickel,
E¹, E² représentent un atome de phosphore,
R¹ à R⁴ représentent un groupe cycloalkyle en C₃ à C₁₄ ou alkyle en C₂ à C₂₈ linéaire, ramifié ou comprenant des carbocycles, qui présente au moins un groupe hydroxyle, amino, carboxyle, phosphorique, ammonium ou sulfonique terminal ou interne, ou bien un groupe alkylaryle ayant de 1 à 28 atomes de C dans son groupe alkyle et de 6 à 15 atomes de C dans son groupe aryle et étant substitué, au niveau du groupe aryle ou du groupe alkyle, par au moins un groupe hydroxyle, carboxyle, amino, phosphorique, sulfonique ou ammonium,
L¹, L² représentent un groupe acétate, trifluoroacétate, tosylate ou halogénure et
p, m, n valent 0.

3. Mise en oeuvre de complexes de métaux de transition solubles dans l'eau selon la revendication 1 ou 2, **caractérisée en ce que** les restes R¹ à R⁴ représentent un groupe cycloalkyle en C₃ à C₁₄ ou alkyle en C₂ à C₂₈ linéaire, ramifié ou comprenant des carbocycles, qui présente au moins un groupe hydroxyle, amino, carboxyle, phosphorique, ammonium ou sulfonique terminal ou interne, ou bien un groupe alkylaryle ayant de 1 à 28 atomes de C dans son groupe alkyle et de 6 à 15 atomes de C dans son groupe aryle et étant substitué, au niveau du groupe aryle ou du groupe alkyle, par au moins un groupe hydroxyle, amino, carboxyle, phosphorique, ammonium ou sulfonique.

4. Procédé pour la préparation des ligands chélate solubles dans l'eau de formule générale (III)
(R¹)(R²)E¹-G-E²(R³)(R⁴) (III)
dans laquelle les substituants et les exposants prennent les significations suivantes :
G représente -(CR^{b}₂)ᵣ- ou -(CR^{b}₂)-N-(R⁵) -(CR^{b}₂)- où
R^{b} représente un atome d'hydrogène, un groupe alkyle en C₁ à C₂₀ ou aryle en C₆ à C₁₅,
r vaut 1, 2, 3 ou 4,
R⁵ représente un atome d'hydrogène, un groupe alkyle en C₁ à C₂₈, cycloalkyle en C₃ à C₁₄, aryle en C₆ à C₁₅, ou bien un groupe alkyle en C₁ à C₂₈, cycloalkyle en C₃ à C₁₄, aryle en C₆ à C₁₅ substitué par des groupes fonctionnels à base d'éléments des groupes IVA, VA, VIA ou VIIA de la Classification Périodique des Eléments,
E¹, E² représentent un atome de phosphore,
R¹ à R⁴ représentent un groupe cycloalkyle en C₃ à C₁₄ ou alkyle en C₂ à C₂₈ linéaire, ramifié ou comprenant des carbocycles, qui présente au moins un groupe hydroxyle, amino, carboxyle, phosphorique, ammonium ou sulfonique terminal ou interne, ou bien un groupe alkylaryle ayant de 1 à 28 atomes de C dans son groupe alkyle et de 6 à 15 atomes de C dans son groupe aryle et étant substitué, au niveau du groupe aryle ou du groupe alkyle, par au moins un groupe hydroxyle, carboxyle, amino, phosphorique, ammonium ou sulfonique,
**caractérisé en ce que** l'on
a) transforme un composé de formule générale (IIIa))
L-(CR^{b} ₂)ᵣ-L ou L-(CR^{b} ₂)-N(R⁵)-(CR^{b} ₂)-L (IIIa))
dans laquelle
R^{b} représente un atome d'hydrogène, un groupe alkyle en C₁ à C₂₀ ou aryle en C₆ à C₁₅,
r vaut 1, 2, 3 ou 4,
R⁵ représente un atome d'hydrogène, un groupe alkyle en C₁ à C₂₈, cycloalkyle en C₃ à C₁₄, aryle en C₆ à C₁₅, ou bien un groupe alkyle en C₁ à C₂₈, cycloalkyle en C₃ à C₁₄, aryle en C₆ à C₁₅ substitué par des groupes fonctionnels à base d'éléments des groupes IVA, VI, VIA ou VIIA de la Classification Périodique des Eléments, et
L représentent, indépendamment l'un de l'autre, un groupe chlorure, bromure ou iodure,
au moyen d'une réaction d'Arbuzov en employant les trialcoxyphosphines pour obtenir les composés de formule (IIIb) dans laquelle
L représente P(L')₃, où
L' représente un groupe O-C₁- à O-C₆-alkyle, O-C₆- à O-C₁₀ ou O-alkylaryle ayant de 1 à 6 atomes de C dans son reste alkyle et de 6 à 20 atomes de C dans son reste aryle,
b) transforme par réduction le composé (IIIb) en composé de formule générale (IIIc) dans laquelle L' représente un atome d'hydrogène et
c) soumet à une polymérisation par voie radicalaire le composé de formule (IIIc) en présence d'au moins quatre équivalents d'un composé à insaturation oléfinique présentant au moins un groupe fonctionnel ionique ou polaire à activité protonique à base d'éléments non métalliques des groupes IVA à VIA de la Classification Périodique des Eléments.

5. Procédé selon la revendication 4, **caractérisé en ce que** l'on met en oeuvre, en tant que composé à insaturation oléfinique, un composé de formule (IVa)
CH₂=C(R^{d})-(CR^{d} ₂)ₖ₋₁-(T)₁-(CR^{d} ₂)_{k'}-Y
dans laquelle les substituants, les indices et les exposants prennent les significations suivantes :
R^{d} représentent, indépendamment les uns des autres, un atome d'hydrogène, un groupe alkyle en C₁ à C₂₀, cycloalkyle en C₃ à C₁₀, aryle en C₆ à C₁₅ ou alkylaryle présentant 1 à 10 atomes de C dans son reste alkyle et 6 à 15 atomes de C dans son reste aryle ainsi qu'en plus Y,
T représente un groupe cycloalcène en C₃ à C₁₀, en particulier un groupe cycloalcène en C₃ à C₆, ou arylène en C₆ à C₁₅, en particulier un groupe arylène en C₆ à C₁₀, éventuellement substitué par R^{d} ou par Y,
k est un nombre compris entre 1 à 20, dans le cas où 1 = 0 ou 1 = 1 et T = un groupe cycloalkyle, ou est un nombre compris entre 2 à 20, dans le cas où 1 = 1 et T = un groupe aryle,
k' vaut de 0 à 20,
l vaut 0 ou 1 et
Y représente un groupe fonctionnel ionique ou polaire à activité protonique à base d'éléments des groupes IVA à VIA de la Classification Périodique des Eléments.
